# EUROPÄISCHE PATENTSCHRIFT

(11) **EP 3 800 143 B1**
(45) Veröffentlichungstag und Bekanntmachung des Hinweises auf die Patenterteilung: **24.12.2025**
(21) Anmeldenummer: 20199568.5
(22) Anmeldetag: 01.10.2020
(51) Int. Cl.: B65G 7/12

(54) **VORRICHTUNG ZUM LAGEGENAUEN POSITIONIEREN EINER TRANSPORTPALETTE**
DEVICE FOR ACCURATELY POSITIONING A TRANSPORT PALLET
DISPOSITIF DE POSITIONNEMENT PRÉCIS D'UNE PALETTE DE TRANSPORT

(30) Priorität: 01.10.2019 DE 102019126427
(43) Veröffentlichungstag der Anmeldung: 07.04.2021
(73) Patentinhaber: Deutsche Post AG, 53113 Bonn (DE)
(72) Erfinder: Meiner, Hendrik, 04155 Leipzig (DE)
(74) Vertreter: Michalski Hüttermann & Partner Patentanwälte mbB

(56) Entgegenhaltungen:
- GB-A- 862 534
- US-A- 2 725 946
- US-A- 2 776 856
- US-A- 5 921 597
- US-B2- 6 494 513
- US-B2- 8 424 886

## Beschreibung

### Technisches Gebiet

Die Erfindung betrifft eine Vorrichtung zum lagegenauen Positionieren einer Transportpalette, insbesondere einer Luftfracht-Palette, auf einem Untergrund, auf dem die Transportpalette entlang gleiten kann, beispielsweise einem Castor-Deck.

### Hintergrund der Erfindung

Im Stand der Technik sind eine Reihe von Vorrichtungen und Verfahren bekannt, um Transportpaletten auf ebenen Untergründen oder auf Caster-Decks in Lagerhallen, Schiffen, Flugzeugen oder Fahrzeugen zu positionieren.

Eine zu diesem Zweck bekannte Lösung besteht in der Nutzung eines Zugbands oder Zughakens, das bzw. der mittels sogenannter Doppelpilzösen an Randleisten von Luftfrachtpaletten angebracht werden. Zur Bewirkung einer gewissen Arbeitssicherheit ist dabei darauf zu achten, dass die beiden freien Enden des Zugbands voneinander beabstandet und mittig an der Palette angebracht werden, so dass infolge der so bewirkten V-Form des Zugbands eine wenn auch stark beschränkte Positionierbarkeit der Palette durch die Bedienperson gegeben ist. Von Nachteil ist außerdem, dass die Palette im Wesentlichen nur in Zugrichtung, also zur Bedienperson hin, positioniert werden kann. Eine Positionierung durch Drehen um eine vertikale Schwenkachse ist nur beschränkt und eine Positionierung durch Schieben in eine Richtung fort von der Bedienperson ist nicht möglich. Dadurch kann eine Bedienperson eine sich auf sie zu bewegende Palette nicht abbremsen, so dass in nachteiliger Weise ein hohes Quetschrisiko gegeben ist.

Die DE 198 20 942 A1 offenbart einen Plattenwagen mit einer abnehmbaren Zugeinrichtung, wobei eine formschlüssige Steckverbindung zwischen der Zugeinrichtung und dem Plattenwage vorgesehen ist, die eine hohe Beweglichkeit der Zugeinrichtung gewährleistet. Dadurch können mit einer einzigen Zugeinrichtung mehrere Plattenwagen bewegt werden.

Die EP 1 852 328 A2 offenbart eine Rollpalette zum Transportieren und zum Stapeln von darauf befindlichen Gütern. Die Rollpalette besteht aus einem quaderförmigen und plattenförmigen Hohlkörper, dessen Seitenwände aus vier länglichen Profilleisten mit rechteckigem Querschnitt aufgebaut sind. Auf den Oberseiten der Profilleisten sind eine Deckplatte und auf den Unterseiten eine Bodenplatte befestigt. In einer Seitenwand ist eine Öffnung eingebracht. Im Innenraum an der Unterseite der Deckplatte sind drei Laufrollen befestigt, die durch Bodenöffnungen in der Bodenplatte hindurch nach unten ragen und die alle mit ihren Laufflächen auf eine zur Bodenplatte etwa parallele Fahrebene ausgerichtet sind.

Die US 2 776 856 A beschreibt Vorrichtungen oder Werkzeuge zum Heben und Transportieren von Materialien und Gegenständen, wie beispielsweise Holz, Kisten, Fliesen und dergleichen. Die Trägervorrichtung umfasst ein Paar im wesentlichen Z-förmige-Blechrahmenelemente, die zueinander beabstandet sind und deren Arme jeweils ungefähr rechtwinklig zu benachbarten Armen angeordnet sind.

Die US 8,424,886 B2 beschreibt eine Vorrichtung nach dem Oberbegriff des vorliegenden Anspruchs 1. Das Dokument beschreibt insbesondere einen Träger für Behälter und insbesondere eine Griffanordnung für einen Trommelträger. Die Griffhalterung umfasst eine Primärhalterung, ein oberes Eingriffsstück, das einstellbar mit der Primärhalterung verbunden ist, und ein unteres Eingriffsstück, das schwenkbar mit der Primärhalterung verbunden ist, wobei das untere Eingriffsstück einen Betätigungsmechanismus, wie beispielsweise eine Trittplatte, zum Schwenken des unteren Eingriffsstücks relativ zum oberen Eingriffsstück umfasst. Ein Vorspannmechanismus, wie beispielsweise eine Schraubenfeder, ist mit dem unteren Eingriffsstück verbunden, um das untere Eingriffsstück nach oben zu drücken.

### Beschreibung der Erfindung

Ausgehend von dieser Situation ist es eine Aufgabe der vorliegenden Erfindung, eine Vorrichtung zum lagegenauen Positionieren einer Transportpalette, insbesondere einer Luftfracht-Palette zur Verfügung zu stellen, mit der eine kontrollierte Positionierung der Palette in allen horizontalen Bewegungsrichtungen, insbesondere bei linearen Bewegungen und Drehbewegungen möglich ist. Außerdem soll die Vorrichtung eine gegenüber bestehenden Lösungen verbesserte Bedienbarkeit und Arbeitssicherheit bieten.

Die Aufgabe der Erfindung wird durch die Merkmale des unabhängigen Anspruchs 1 gelöst. Vorteilhafte Ausgestaltungen sind in den Unteransprüchen angegeben.

Demnach wird die Aufgabe gelöst durch eine Vorrichtung zum lagegenauen Positionieren einer Transportpalette, insbesondere einer Air-Cargo-Palette, umfassend eine Koppeleinheit zum Koppeln mit der Transportpalette, einem an der Koppeleinheit angeordneten Griffelement zur Handhabung der Vorrichtung durch eine Bedienperson und einer Verriegelungseinheit zur positionsfesten und drehfesten Verriegelung der Koppeleinheit mit der Transportpalette.

Die Vorrichtung nach der Erfindung bildet eine Handhabe für eine Bedienperson aus, mit der diese eine Transportpalette, insbesondere eine Luftfracht-Palette, mit geringer Kraft und hoher Genauigkeit lagegenau und drehwinkelspezifisch bewegen, ausrichten und positionieren kann, insbesondere auf einem sogenannten Caster-Deck. Dabei ist eine Positionierung der Palette in beliebiger horizontaler Richtung möglich. Infolge der positionsfesten und drehfesten Verriegelung der Koppeleinheit mit der Transportpalette kann die Bedienperson die Palette in vorteilhafter Weise unter voller Kontrolle zu sich hin ziehen, von sich fort drücken, zu beiden Seiten nach links und rechts bewegen und in beide Richtungen um eine horizontale Schwenkachse drehen. Da die Relativposition von Palette und Bedienperson durch die letztere sehr einfach und effektiv kontrolliert werden kann, bewirkt die Vorrichtung nach der Erfindung eine besonders hohe Arbeitssicherheit, was insbesondere in Anbetracht der teils hohen bewegten Gewichte aber ebenso bei leeren oder beispielsweise mit einem Gewicht bis 100 kg beladenen Paletten von besonderer Bedeutung ist.

Nach einer Ausführungsform der Erfindung weist das Griffelement ein eine in horizontaler Richtung angeordnete Drehachse aufweisendes Drehgelenk auf. Alternativ oder zusätzlich ist das Griffelement mittels eines derartigen Drehgelenks an der Koppeleinheit angeordnet. Auf die vorstehend beschriebenen Weisen ist sichergestellt, dass das Griffelement relativ zur Koppeleinheit um eine bei bestimmungsgemäßer Verwendung der Vorrichtung horizontale Achse drehbar ist. Vorzugsweise ist das Griffelement in einem Winkelbereich von wenigstens 180° verschwenkbar, derart, dass es bei mit der Palette in Eingriff stehender Koppeleinheit in beiden Drehrichtung auf dem Boden bzw. der Palette zu liegen kommen kann und auf diese Weise eine Übertragung eines quer zum Rand der Palette wirkenden Drehmoments durch das Griffelement und die Koppeleinheit auf den Rand der Palette und damit dessen Beschädigung sicher verhindert werden kann. Die Erfindung umfasst jedoch auch Ausführungsformen mit kleinerem Schwenkwinkelbereich, zum Beispiel von etwa 90° oder +/- 10° oder +/- 5°. Bereits bei einem Schwenkwinkel in einem Bereich von etwa 110° ist das Risiko einer Beschädigung der Palette gering. Durch Vorsehen eines derartigen Drehgelenks können bei der Handhabung der Palette mittels der Vorrichtung auftretende Bewegungsabläufe sehr flexibel gestaltet werden. Das Drehgelenk kann insbesondere skalierbar oder einstellbar ausgebildet sein, so dass der durch dieses für das Griffelement ermöglichte Schwenkwinkelbereich je nach den vorliegenden Anforderungen spezifisch eingestellt werden kann. Beispielsweise kann der Schwenkwinkel durch Anschläge am Drehgelenk bestimmt werden. Die Anschläge ermöglichen, dass ein weiter unten beschriebenes Riegelelement bei bestimmten Schwenkwinkeln in Richtung Bedienperson die Arretierung gewährleisten kann. Der maximal Schwenkwinkel zur Bedienperson kann beispielsweise 42 oder 49 Grad betragen.

Eine besonders hohe Sicherheit gegen Quetschverletzungen von Bedienpersonen kann nach einer weiteren Ausführungsform bewirkt werden, indem der Schwenkwinkel der vorstehend genannten Drehgelenke des Griffelements derart ausgebildet ist, dass die Unterseite des Griffelements auf der dem Koppelelement gegenüberliegenden Seite stets um einen Abstand von etwa 19cm +/- 1cm vom Boden beabstandet ist. Derart können insbesondere Fußquetschungen der Bedienperson nahezu sicher ausgeschlossen werden. In Richtung der Palette sollte das Griffelement derart schwenkbar sein, dass sein oberes Ende um etwa 40 cm bis 50 cm in die Grundfläche der Palette hineinragt. Auf diese Weise kann das Griffelement und damit nahezu die gesamte Vorrichtung innerhalb der Palette "geparkt" werden, ohne dass Teile der Vorrichtung wesentlich von der Palette in den diesen umgebenden Raum vorstehen und eine Gefahrenquelle für passierende Personen oder Fahrzeuge darstellen. Außerdem kann durch Vorsehen des Drehgelenks verhindert werden, dass der Bügel benutzt wird, um die dem Bügel gegenüberliegende Kante der Palette anzuheben oder die Palette am Bügel zu schieben, wenn dieser in der obersten Stellung ist.

Eine weitere Ausführungsform der Erfindung ist dadurch gekennzeichnet, dass das Griffelement einen im Wesentlichen U-förmigen Bügel mit zwei freien Enden oder Armen aufweist. In diesem Fall ist an beiden freien Enden /Armen jeweils eine Koppeleinheit angeordnet. Eine solche Gestaltung des Griffelements ist in vorteilhafter Weise besonders bedienerfreundlich, weil Drehbewegungen der Palette in beide Richtungen sehr einfach und mit geringem Kraftaufwand zu bewerkstelligen sind. Außerdem bietet ein solcher Bügel ausreichend Raum für eine beidhändige Betätigung, was wiederum eine Arbeitserleichterung bedeutet. Ein weiterer Vorteil ist, dass die Palette mittels zweier zueinander beabstandeter Koppelelemente kontaktiert wird, so dass über ein einzelnes Koppelelement übertragende Kräfte und Momente gering sind, so dass Beschädigungen der Palette und deren Randleiste sicher vermieden werden können.

Erfindungsgemäß weist die Koppeleinheit eine im Wesentlichen U-förmige Klaue auf. Diese Klaue ist zum randseitigen Umgreifen der Transportpalette ausgebildet und bestimmt. Sie besitzt bevorzugt einen untern freien Arm, der zum Untergreifen des Rands der Palette ausgebildet und bestimmt ist, einen oberen freien Arm, der zum Übergreifen des Rands der Palette ausgebildet und bestimmt ist, und ein die beiden Arme miteinander verbindendes Mittelstück, dass zu einer randseitigen Anlage und insbesondere zur Übertragung von Schubkräften von der Vorrichtung auf die Palette ausgebildet und bestimmt ist. Der Abstand der beiden freien Arme zueinander ist vorzugsweise leicht größer als die randseitige Dicke der Palette, derart, dass sowohl ein einfaches Anordnen der Koppeleinrichtung am Palettenrand als auch ein ausreichend stabiler Sitz sichergestellt ist.

Erfindungsgemäß ist vorgesehen, dass die Verriegelungseinheit ein zur Koppeleinheit relativpositionierbares Riegelelement aufweist. Dieses wirkt mit der Palette in einer das Koppelelement daran festlegenden und sichernden Weise zusammen, insbesondere indem es zum Eingreifen in eine Seat Track-Leiste der Transportpalette ausgebildet ist. Das Riegelelement kann nach der Erfindung formschlüssig und/oder kraftschlüssig mit der Palette zusammenwirken. Es verhindert ein unbeabsichtigtes Lösen der Koppeleinrichtung von der Palette während deren Handhabung mittels der erfindungsgemäßen Vorrichtung. Außerdem kann das Riegelelement einen Form- und/oder Kraftschluss zwischen der Koppeleinheit, insbesondere der Klaue, und der Palette bewirken, so dass es wesentlich zur Positionierbarkeit der Palette in alle horizontalen Richtungen beträgt. Durch das Riegelelement wird ein unbeabsichtigtes Lösen der Koppeleinrichtung von der Palette sicher vermieden, was wiederum zu einer Verbesserung der Arbeitssicherheit gegenüber dem Stand der Technik beiträgt.

Gemäß der Erfindung ist vorgesehen, dass das Riegelelement zumindest einen freien Arm der U-förmigen Klaue durchgreift. Alternativ kann es erfindungsgemäß auch in den gegenüberliegenden freien Arm der Klaue eingreifen oder diesen ebenfalls durchgreifen. Auf diese Weise sind ein fester und sicherer Sitz an der Palette und eine gute Kraft- und Momentübertragung sichergestellt.

Nach einer besonders sicheren und anwenderfreundlichen Ausführungsform der Erfindung ist das Riegelelement in eine Sperrstellung, in der die Klaue mit der Transportpalette verriegelt ist, vorgespannt. Diese Vorspannung kann durch beliebige Vorspannmittel erfolgen, eine besonders robuste und günstige Lösung sieht vor, dass sie mittels einer mechanischen Druckfeder oder Zugfeder erzeugt wird.

Erfindungsgemäß umfasst die Vorrichtung außerdem eine durch eine Bedienperson betätigbare Auslösevorrichtung zum Entriegeln der Verriegelungseinheit. Die Auslösevorrichtung weist einen mit dem Riegelelement wirkverbundenen Schwenkhebelmechanismus auf. Alternativ oder zusätzlich kann die Auslösevorrichtung einen nahe des Griffelements angeordneten Zugbügel zur händischen Betätigung aufweisen. Eine besonders ergonomische Ausführungsform sieht vor, dass die Auslösevorrichtung fußbetätigbar ist, so dass eine Entriegelung besonders schnell und einfach erfolgen kann, ohne dass eine Bedienperson das Griffelement loslassen müsste oder sich bücken muss. Derart wird wiederum die Sicherheit der Bedienperson verbessert, da diese die Lage und Position der Palette bei damit verbundener Vorrichtung stets und fortwährend kontrollieren und ggf. korrigieren kann.

Eine weitere Ausführungsform der Erfindung sieht vor, dass die Vorrichtung ein Dämpfungselement umfasst. Dieses verbindet die Koppeleinheit dämpfend mit dem Griffelement, so dass während einer Handhabung der Palette entstehende und auf die Vorrichtung übertragene Stöße und Vibrationen in vorteilhafter Weise nicht auf die Bedienperson und insbesondere deren Handgelenke übertragen werden. Außerdem werden in umgekehrter Richtung von dem Griffelement auf die Palette wirkende Belastungen gedämpft, was Belastungen und Beschädigungen der Palette verringert. Das Dämpfungselement kann insbesondere in Form eines Gummidämpfers oder Silentblocks vorliegen. Wenn die Vorrichtung ein zwischen der Koppeleinrichtung und dem Griffelement angeordnetes und wirkendes Drehgelenk aufweist, kann nach einer besonders kompakten Ausführungsform der Vorrichtung das Dämpfungselement in das Drehgelenk integriert sein. Das Dämpfungselement kann in vorteilhafter Weise einstellbar sein.

Die Vorrichtung kann als Schweißkonstruktion aus einem geeigneten Stahlwerkstoff oder aber aus Stahlguss bestehen.

Das Griffelement kann insbesondere hohl oder aus Rohrelementen ausgebildet sein. Komponenten wie die Entriegelungseinrichtung und/oder das Dämpfungselement können dann in vorteilhafter Weise in dem Griffelement von negativen Umgebungseinflüssen und der Bedienperson abgeschirmt angeordnet sein.

Ferner ist Verwendung dahingehend denkbar, dass die Vorrichtung nicht mit einem Zugbetätigungsgriff per manuellen Handling verwendet wird, sondern der Kraftdruck durch ein Hydrauliksystem einer maschinellen Vorrichtung ausgeübt wird. Dieses System ist mit einer geeigneten Zugmaschine verbunden und kann bei einer Anordnung von mehreren nebeneinander verbundenen Kopplungselementen auch voll beladener Luftfrachtpaletten auf einem Castor-Deck oder Ähnlichem unter voller Kontrolle der Bedienperson bewegt werden. Zudem ist weitere Verwendung dahingehend denkbar, dass die Vorrichtung nicht mit einem Zugbetätigungsgriff per manuellen Handling verwendet wird, sondern der Kraftdruck durch ein Hydrauliksystem einer maschinellen Vorrichtung ausgeübt wird. Diese System ist mit einer geeigneten Zugmaschine verbunden und kann bei einer Anordnung von mehreren nebeneinander verbundener Kopplungselemente auch voll beladene Luftfrachtpaletten auf einem Castor Deck oder ähnlichen unter voller Kontrolle bewegen.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: ein erstes Ausführungsbeispiel der Erfindung in zwei schematischen Ansichten aus unterschiedlichen Blickrichtungen,
- Fig. 2: eine Detailansicht des Beispiels der Fig. 1 in einer seitlichen Ansicht,
- Fig. 3: eine Detailansicht eines weiteren Ausführungsbeispiels in einer Schnittansicht,
- Fig. 4: eine Detailansicht des weiteren Ausführungsbeispiels der Figur 3 in einer seitlichen Ansicht,
- Fig. 5: eine Detailansicht des weiteren Ausführungsbeispiels in einer seitlichen Ansicht,
- Fig. 6: eine Detailansicht des Beispiels der Fig. 1 als weiteres Ausführungsbeispiel mit Transporträdern.

### Detaillierte Beschreibung der Ausführungsbespiele

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

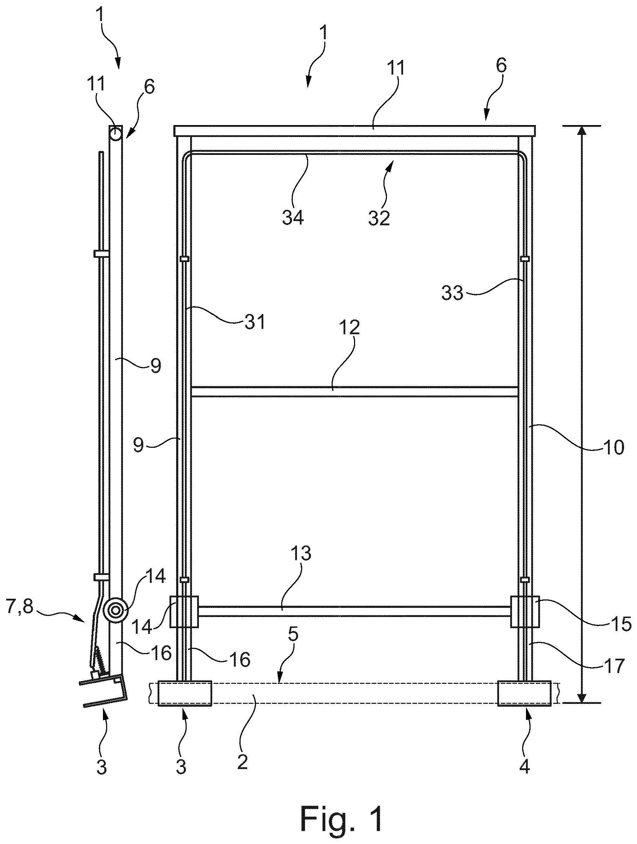

Figur 1 zeigt ein erstes Ausführungsbeispiel einer Vorrichtung 1 zum lagegenauen Positionieren einer Transportpalette 2, die hier in Form einer Luftfracht-Palette 2 ausgebildet ist. Die Vorrichtung 1 weist eine erste Koppeleinheit 3 und eine zweite baugleiche Koppeleinheit 4 zum Koppeln mit einer Randleiste 5 der Transportpalette 2 auf. Die Randleiste 5 ist insbesondere als sogenannte Seat Track-Leiste 5 ausgebildet. Die Palette 2 umfasst außerdem ein an den Koppeleinheiten 3 und 4 angeordnetes Griffelement 6 zur Handhabung der Vorrichtung 1 durch eine nicht dargestellte Bedienperson. Schließlich besitzt die Vorrichtung 1 eine erste Verriegelungseinheit 7 und eine zweite Verriegelungseinheit 8 jeweils zur positionsfesten und drehfesten Verriegelung der entsprechenden Koppeleinheit 3 bzw. 4 mit der Randleiste 5 der Transportpalette 2. Da die erste Koppeleinheit 3 und die zweite Koppeleinheit 4 baugleich sind, wird im Folgenden nur die erste Koppeleinheit 3 beschrieben, welche Beschreibung jedoch in gleicher Weise für die Koppeleinheit 4 gilt.

Das Griffelement 6 ist als im Wesentlichen U-förmiger Bügel 6 mit einem ersten freien Griffelementarm 9, einem gegenüberliegenden zweiten freien Griffelementarm 10 und einem diese miteinander verbindenden Griffabschnitt 11 ausgebildet. Die beiden Griffelementarme 9 und 10 sind mittels einer mittleren Querstrebe 12 und einer endseitigen Querstrebe 13 stabilisierend miteinander verbunden.

Insbesondere in der Seitenansicht der Figur 1 ist deutlich zu erkennen, dass **in** dem Griffelementarm 9 ein Drehgelenk 14 und in dem Griffelementarm 10 ein baugleiches Drehgelenk 15 angeordnet sind. Das Drehgelenk 14 verbindet den Griffelementarm 9 mit einem unteren Armabschnitt 16, während das Drehgelenk 15 verbindet den Griffelementarm 10 mit einem unteren Armabschnitt 17 verbindet. Wie in der Vorderansicht der Figur 1 gezeigt ist, ist der Armabschnitt 16 fest mit der Koppeleinheit 3 verbunden, hier verschweißt. Außerdem ist der Armabschnitt 17 fest mit der Koppeleinheit 4 verbunden, hier verschweißt. Die beiden Drehgelenke 14 und 15 sind jeweils gedämpft mit einem in den Figuren nicht erkennbaren Dämpfungselement in Form eines Silentblocks ausgebildet. Sie besitzen einen Schwenkwinkelbereich in einem Bereich von etwa 110°.

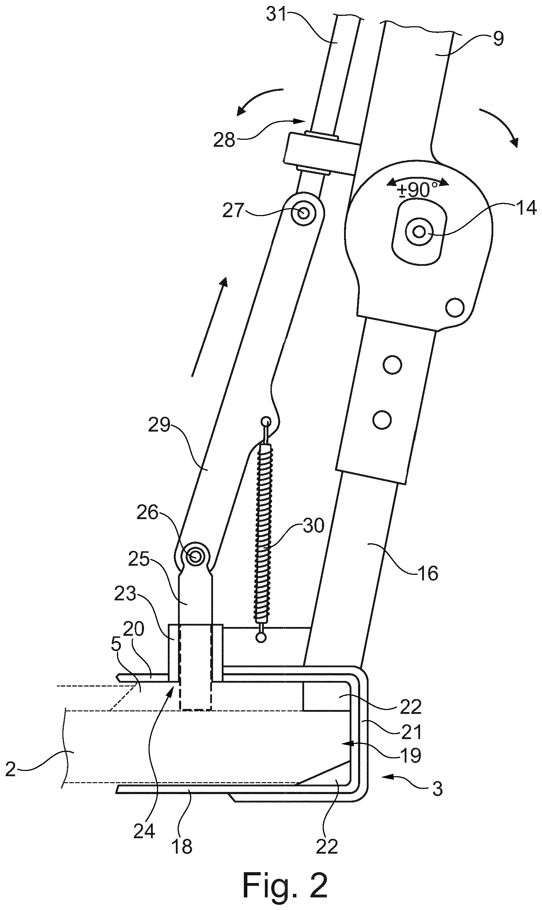

Einzelheiten der Koppeleinheit 3 sind in Figur 2 gezeigt. Die Koppeleinheit 3 ist in Form einer im Wesentlichen U-förmigen Klaue 3 ausgebildet. Sie ist zum randseitigen Umgreifen der Transportpalette 2 ausgebildet und besitzt einen untern freien Arm 18, der zum Untergreifen des Rands 19 der Palette 2 ausgebildet ist, einen oberen freien Arm 20, der zum Übergreifen des Rands 19 der Palette 2 ausgebildet ist, und ein die beiden Arme 18 und 20 miteinander verbindendes Mittelstück 21, dass zu einer randseitigen Anlage an der Palette 2 und damit zur Übertragung von Schubkräften von der Vorrichtung 1 auf die Palette 2 ausgebildet ist. Der Abstand der beiden freien Arme 18 und 20 zueinander ist vorzugsweise leicht größer als die randseitige Dicke der Palette 2, derart, dass sowohl ein einfaches Anordnen der Koppeleinrichtung 3 am Palettenrand 19 als auch ein ausreichend stabiler Sitz sichergestellt ist. Zwischen den Armen 18 bzw. 20 und dem Mittelstück 21 sind Versteifungen 22 ausgebildet.

In dem oberen Arm 20 ist eine von einer Führungshülse 23 umgebene Öffnung 24 ausgebildet, in der ein Riegelelement 25 der Verriegelungseinheit 7 quer zur Palettenebene positionierbar aufgenommen ist. Das Riegelelement 25 ist demnach zur Koppeleinheit 3, 4 relativpositionierbar und zum Eingreifen in die Randleiste 5 oder Seat Track-Leiste 5 der Transportpalette 2 ausgebildet ist. Die Verriegelungseinheit 7 umfasst außerdem eine einerseits um einen Drehzapfen 26 schwenkbar an dem Riegelelement 25 und andererseits um einen Drehzapfen 27 schwenkbar an einer Auslösevorrichtung 28 angeordneten Koppelhebel 29. Diese ist mittels eines Vorspannelements 30 hier in Form einer Zugfeder 30 in eine die Verriegelungseinheit 7 in eine Sperrstellung, in der die Klaue 3 mit der Transportpalette 2 verriegelt ist, vorgespannt.

Der Koppelhebel 29 ist schwenkbar mit einem freien Arm 31 eines U-förmigen Zugbetätigungsgriffs 32 verbunden. Dieser umfasst neben dem Arm 31 einen dazu parallelen Arm 33, der endseitig mit dem Koppelhebel 29 der Koppeleinrichtung 4 verbunden ist.

Die beiden Arme 31 und 33 sind über ein Griffmittelstück 34 miteinander verbunden. Durch die vorstehend beschriebene Geometrie kann das Griffelement 6 um die beiden Drehgelenke 14 und 15 geschwenkt werden, ohne dass eine solche Schwenkbewegung ein Lösen der Verriegelungseinheiten 7 bzw. 8 bewirkt. Diese können nur durch eine nutzerseitige Betätigung durch Hochziehen des Zugbetätigungsgriffs 32, der über die jeweiligen Koppelhebel 29 auf die entsprechenden Riegelelemente 25 wirkt, gegen die Spannung der Feder 30 entriegelt werden, indem die Riegelelemente 25 angehoben werden.

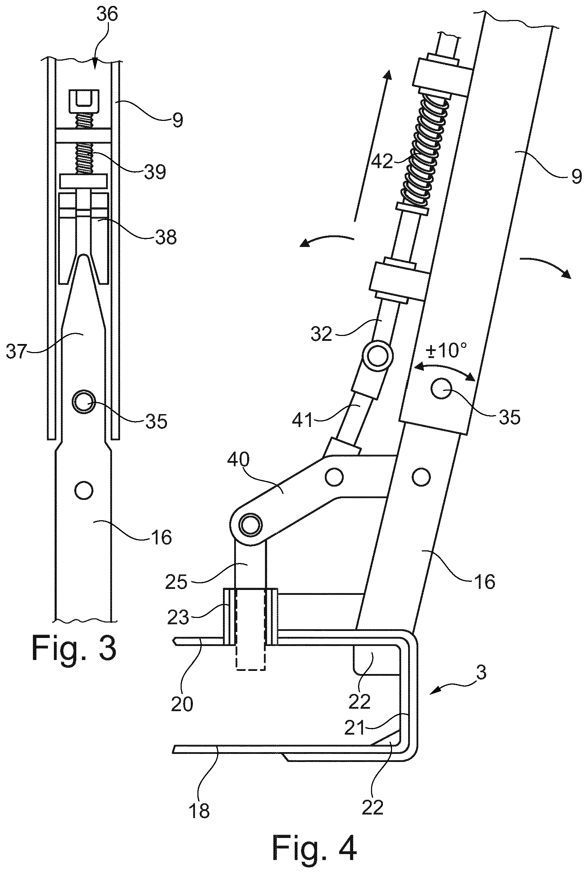

Die Figuren 3 und 4 zeigen ein weiteres Ausführungsbeispiel der Vorrichtung 1 in Detailansichten. Dieses gleicht in weiten Teilen dem vorstehend beschriebenen Ausführungsbeispiel der Figuren 1 und 2, so dass auf diese Beschreibung verwiesen wird und im Folgenden nur Unterschiede beschrieben werden. Anstelle der Schwenkgelenke 14 und 15 sind Schwenkgelenke 35 mit einem deutlich kleineren Schwenkwinkelbereich von ca. +/-5° in beide Richtungen zwischen den Griffelementarmen 9, 10 und dem jeweiligen Armabschnitt 16, 17 ausgebildet. Der Griffelementarm 9, 10 ist rohrförmig und in seinem Inneren ist eine Dämpfungseinheit 36 ausgebildet, die in Figur 3 gezeigt ist.

Der Armabschnitt 16, 17 ragt mit einem kegelstumpfförmigen Zapfen 37 über das Schwenkgelenk 35 hinaus in den Griffelementarm 9, 10 hinein. Dieser Zapfen 37 greift mit seinem distalen Ende in eine Gummihülse 38 als Dämpfungselement 38 aus einem Gummimaterial mit einer Shore-Härte in einem Bereich zwischen 45 und 53 ein. Die Gummihülse 38 ist mittels einer am Griffelementarm 9, 10 lagefest angeordneten Schraube 39 in Richtung des Zapfens 37 positionierbar, wodurch die Härte der bewirkten Dämpfung eingestellt werden kann. Ein weiterer Unterschied ist, dass anstelle des Koppelhebels 29 ein einerseits drehbar an dem Armabschnitt 16, 17 und andererseits drehbar an dem Riegelelement 25 angeordneter Koppelhebel 40 vorgesehen ist. An diesem ist in etwa mittig ein gelenkig mit dem Zugbetätigungsgriff 32 verbundener Verbindungshebel 41 angelenkt. Der Zugbetätigungsgriff 32 ist mittels einer Druckfeder 42 in die Sperrstellung vorgespannt.

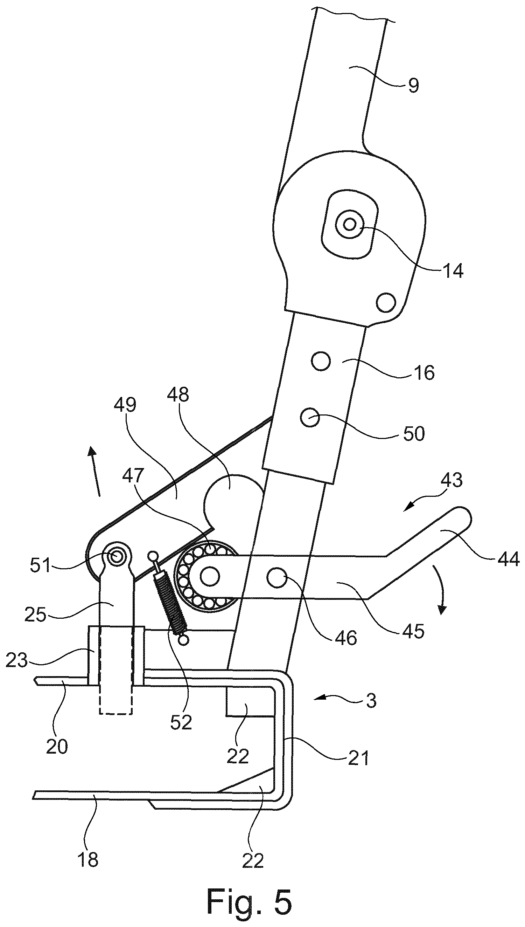

Das Ausführungsbeispiel der Figur 5 unterscheidet sich von dem Ausführungsbeispiel der Figuren 1 und 2 dadurch, dass anstelle der Auslösevorrichtung 28 mit dem händisch zu bedienenden Zugbetätigungsgriff 32 eine Auslösevorrichtung 43 aufweist. Diese umfasst einen mit einer Fußraste 44 versehenen Betätigungshebel 45, der mit einem Drehgelenk 46 am Armabschnitt 16 angelenkt ist. An seinem der Fußraste 44 gegenüberliegenden Ende ist der Hebel 45 mit einer Rolle 47 versehen, die gegen einen Koppelarm 49 in Anlage gebracht und in eine Aussparung 48 des Koppelarms 49 eingreifen kann.

Der Koppelarm 49 ist mit einem Gelenk 50 einerseits mit dem Armabschnitt 16 und andererseits mit einem Gelenk 51 mit dem Riegelelement 25 verbunden und ist mittels einer Zugfeder 52 in die Sperrstellung vorgespannt. Um die Verriegelungseinheit 7 aus der Sperrstellung in die Freistellung zu verbringen, muss die Bedienperson die Fußraste 44 nach unten treten, wodurch der Koppelhebel 45 um sein Drehgelenk 46 dreht und die Rolle 47 gegen den Koppelarm 49 in Anlage bringt. Durch eine weitere Betätigung der Fußraste 44 wird der Koppelarm 49 um sein Gelenk 50 verschwenkt und angehoben und nimmt dabei das Riegelelement 25 aus der Sperrstellung mit in die Freistellung. Durch Einrasten der Rolle 47 in die Aussparung 48 kann der Koppelarm 49 in der Freistellung gehalten werden.

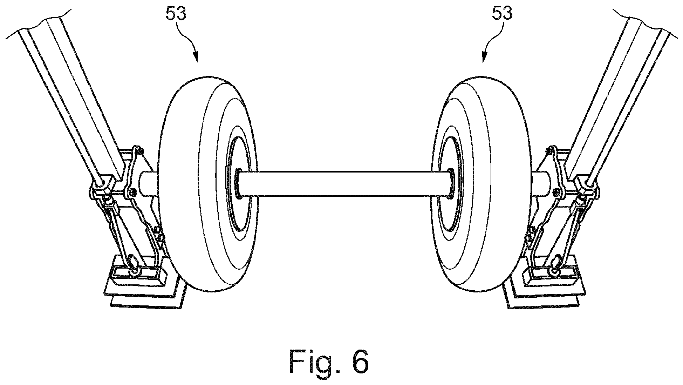

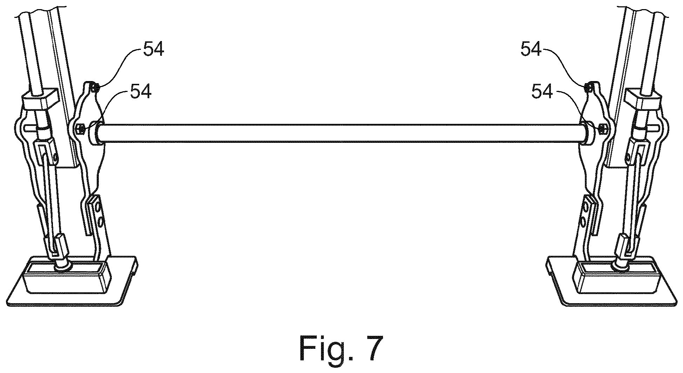

Schließlich zeigt Figur 6 ein weiteres Ausführungsbeispiel der Vorrichtung 1 mit Transporträdern 53, die auf der unteren Querstrebe 13 zwischen den Griffelementarmen 9, 10 gelagert sind. Ebenso könnten die Transporträder 53 außerhalb der Griffelementarme 9, 10 an der unteren Querstrebe 13 gelagert sein. Figur 7 zeigt ein weiteres Ausführungsbeispiel der Vorrichtung 1 mit Anschlägen 54 an dem Drehlenk 14, um den Koppelhebel 45 zu Arretieren.

Die beschriebenen Ausführungsbeispiels sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

### Bezugszeichenliste

| | |
|---|---|
| Vorrichtung | 1 |
| Transportpalette, Luftfracht-Palette | 2 |
| Koppeleinheit | 3 |
| Koppeleinheit | 4 |
| Randleiste | 5 |
| Griffelement | 6 |
| Verriegelungseinheit | 7 |
| Verriegelungseinheit | 8 |
| Griffelementarm | 9 |
| Griffelementarm | 10 |
| Griffabschnitt | 11 |
| Querstrebe | 12 |
| Querstrebe | 13 |
| Drehgelenk | 14 |
| Drehgelenk | 15 |
| Armabschnitt | 16 |
| Armabschnitt | 17 |
| Arm | 18 |
| Rand | 19 |
| Arm | 20 |
| Mittelstück | 21 |
| Versteifungen | 22 |
| Führungshülse | 23 |
| Öffnung | 24 |
| Riegelelement | 25 |
| Drehzapfen | 26 |
| Drehzapfen | 27 |
| Auslösevorrichtung | 28 |
| Koppelhebel | 29 |
| Vorspannelement, Zugfeder | 30 |
| Arm | 31 |
| Zugbetätigungsgriff | 32 |
| Arm | 33 |
| Griffmittelstück | 34 |
| Schwenkgelenk | 35 |
| Dämpfungseinheit | 36 |
| Zapfen | 37 |
| Gummihülse, Dämpfungselement | 38 |
| Schraube | 39 |
| Koppelhebel | 40 |
| Verbindungshebel | 41 |
| Druckfeder | 42 |
| Auslösevorrichtung | 43 |
| Fußraste | 44 |
| Betätigungshebel | 45 |
| Drehgelenk | 46 |
| Rolle | 47 |
| Ausnehmung | 48 |
| Koppelarm | 49 |
| Drehgelenk | 50 |
| Drehgelenk | 51 |
| Zugfeder | 52 |
| Transporträder | 53 |
| Anschlag | 54 |

## Patentansprüche

1. Vorrichtung (1) zum lagegenauen Positionieren einer Transportpalette (2), insbesondere einer Luftfracht-Palette (2), umfassend
eine Koppeleinheit (3, 4) zum Koppeln mit der Transportpalette (2),
ein an der Koppeleinheit (3, 4) angeordnetes Griffelement (6) zur Handhabung der Vorrichtung (1) durch eine Bedienperson und
eine Verriegelungseinheit (7, 8) zur positionsfesten und drehfesten Verriegelung der Koppeleinheit (3, 4) mit der Transportpalette (2),
wobei die Vorrichtung (1) eine durch eine Bedienperson betätigbare Auslösevorrichtung (28, 43) zum Entriegeln der Verriegelungseinheit (7, 8) umfasst,
wobei die Auslösevorrichtung (28, 43) einen mit einem Riegelelement (25) der Verriegelungseinheit (7, 8) wirkverbundenen Schwenkhebelmechanismus (43, 44, 45, 46, 47, 48, 49) aufweist,
wobei die Koppeleinheit (3, 4) eine im Wesentlichen U-förmige Klaue (3, 4) zum randseitigen Umgreifen der Transportpalette (2) aufweist,
wobei das Riegelelement (25) der Verriegelungseinheit (7, 8) zur Koppeleinheit (3, 4) relativpositionierbar ist und zum Eingreifen in eine Seat Track-Leiste (5) der Transportpalette (2) ausgebildet ist,
**dadurch gekennzeichnet, dass** das Riegelelement (25) zumindest ein freies Ende oder einen freien Arm (18, 20) der U-förmigen Klaue (3, 4) durchgreift.

2. Vorrichtung (1) nach dem vorhergehenden Anspruch, wobei das Griffelement (6) ein eine in horizontaler Richtung angeordnete Drehachse aufweisendes Drehgelenk (14, 15, 35) aufweist und/oder mittels eines derartigen Drehgelenks (14, 15, 35) an der Koppeleinheit (3, 4) angeordnet ist, so dass das Griffelement (6) relativ zur Koppeleinheit (3, 4) um eine bei bestimmungsgemäßer Verwendung der Vorrichtung horizontale Achse drehbar ist.

3. Vorrichtung (1) nach einem der vorhergehenden Ansprüche, wobei das Griffelement (6) einen im Wesentlichen U-förmigen Bügel (6) mit zwei freien Armen (9, 10) aufweist und an beiden freien Armen (9, 10) jeweils eine Koppeleinheit (3, 4) angeordnet ist.

4. Vorrichtung (1) nach einem der vorhergehenden Ansprüche, wobei das Riegelelement (25) in eine Sperrstellung, in der die Klaue (3, 4) mit der Transportpalette (2) verriegelt ist, vorgespannt ist, insbesondere mittels eines mechanischen Vorspannelements (30, 42, 52) wie einer mechanischen Druckfeder (42) oder Zugfeder (30, 52).

5. Vorrichtung (1) nach einem der vorhergehenden Ansprüche, wobei der Schwenkhebelmechanismus (43, 44, 45, 46, 47, 48, 49) fußbetätigbar ist und/oder die Auslösevorrichtung (28, 43) einen nahe des Griffelements (6) angeordneten Zugbügel (32) zur händischen Betätigung aufweist.

6. Vorrichtung (1) nach einem der vorhergehenden Ansprüche, umfassend ein Dämpfungselement (38), das die Koppeleinheit (3, 4) dämpfend mit dem Griffelement (6) verbindet, insbesondere einen Gummidämpfer oder Silentblock.

7. Vorrichtung (1) nach dem vorhergehenden Anspruch und Anspruch 2, wobei das Dämpfungselement (38) in das Drehgelenk (14, 15) integriert ist.

## Claims

1. Device (1) for accurately positioning a transport pallet (2), in particular an air-freight pallet (2), comprising
a coupling unit (3, 4) for coupling to the transport pallet (2),
a handle element (6) arranged on the coupling unit (3, 4) for handling of the device (1) by an operator, and
a locking unit (7, 8) for locking the coupling unit (3, 4) to the transport pallet (2) in a positionally fixed and rotationally fixed manner,
wherein the device (1) comprises a trigger device (28, 43) able to be actuated by an operator that serves for unlocking the locking unit (7, 8),
wherein the trigger device (28, 43) has a pivoting-lever mechanism (43, 44, 45, 46, 47, 48, 49) which is operatively connected to a locking element (25) of the locking unit (7, 8),
wherein the coupling unit (3, 4) has a substantially U-shaped claw (3, 4) for engaging around the edge of the transport pallet (2),
wherein the locking element (25) of the locking unit (7, 8) is relatively positionable with respect to the coupling unit (3, 4) and is configured for engaging into a seat-track strip (5) of the transport pallet (2),
**characterized in that** the locking element (25) engages through at least one free end or free arm (18, 20) of the U-shaped claw (3, 4).

2. Device (1) according to the preceding claim, wherein the handle element (6) has a rotary joint (14, 15, 35) with a horizontally positioned axis of rotation and/or is arranged on the coupling unit (3, 4) by means of such a rotary joint (14, 15, 35) such that the handle element (6) is rotatable relative to the coupling unit (3, 4) about an axis which is horizontal when the device is used as intended.

3. Device (1) according to either of the preceding claims, wherein the handle element (6) has a substantially U-shaped bow (6) with two free arms (9, 10), and on both free arms (9, 10) there is arranged in each case one coupling unit (3, 4).

4. Device (1) according to one of the preceding claims, wherein the locking element (25) is preloaded into a locking position, in which the claw (3, 4) is locked to the transport pallet (2), in particular by means of a mechanical preload element (30, 42, 52) such as a mechanical compression spring (42) or tension spring (30, 52).

5. Device (1) according to one of the preceding claims, wherein the pivoting-lever mechanism (43, 44, 45, 46, 47, 48, 49) is able to be actuated by foot and/or the trigger device (28, 43) has a pulling bow (32) arranged close to the handle element (6) that serves for manual actuation.

6. Device (1) according to one of the preceding claims, comprising a damping element (38), which connects the coupling unit (3, 4) to the handle element (6) in a damping manner, in particular a rubber damper or silent block.

7. Device (1) according to the preceding claim and Claim 2, wherein the damping element (38) is integrated into the rotary joint (14, 15).

## Revendications

1. Dispositif (1) pour positionner avec précision une palette de transport (2), notamment une palette de fret aérien (2), comprenant
une unité d'accouplement (3, 4) pour l'accouplement avec la palette de transport (2),
un élément de préhension (6) agencé sur l'unité d'accouplement (3, 4) pour la manipulation du dispositif (1) par un opérateur, et
une unité de verrouillage (7, 8) pour le verrouillage fixe en position et fixe en rotation de l'unité d'accouplement (3, 4) avec la palette de transport (2),
le dispositif (1) comprenant un dispositif de déclenchement (28, 43) actionnable par un opérateur pour déverrouiller l'unité de verrouillage (7, 8),
le dispositif de déclenchement (28, 43) présentant un mécanisme à levier pivotant (43, 44, 45, 46, 47, 48, 49) relié de manière fonctionnelle à un élément verrou (25) de l'unité de verrouillage (7, 8),
l'unité d'accouplement (3, 4) présentant une griffe (3, 4) essentiellement en forme de U destinée à entourer la palette de transport (2) sur les bords,
l'élément verrou (25) de l'unité de verrouillage (7, 8) pouvant être positionné par rapport à l'unité d'accouplement (3, 4) et étant réalisé pour s'engager dans une barre de fixation (5) de la palette de transport (2),
**caractérisé en ce que** l'élément verrou (25) s'engage dans au moins une extrémité libre ou un bras libre (18, 20) de la griffe en forme de U (3, 4).

2. Dispositif (1) selon la revendication précédente, dans lequel l'élément de préhension (6) présente une articulation tournante (14, 15, 35) présentant un axe de rotation agencé dans la direction horizontale et/ou est agencé au moyen d'une telle articulation tournante (14, 15, 35) sur l'unité d'accouplement (3, 4), de telle sorte que l'élément de préhension (6) peut tourner par rapport à l'unité d'accouplement (3, 4) autour d'un axe horizontal lors de l'utilisation conforme du dispositif.

3. Dispositif (1) selon l'une quelconque des revendications, dans lequel l'élément de préhension (6) présente un étrier (6) essentiellement en forme de U avec deux bras libres (9, 10) et une unité d'accouplement (3, 4) est agencée sur chacun des deux bras libres (9, 10).

4. Dispositif (1) selon l'une quelconque des revendications précédentes, dans lequel l'élément de verrouillage (25) est précontraint dans une position de blocage dans laquelle la griffe (3, 4) est verrouillée avec la palette de transport (2), notamment au moyen d'un élément de précontrainte mécanique (30, 42, 52) tel qu'un ressort de pression mécanique (42) ou un ressort de traction (30, 52).

5. Dispositif (1) selon l'une quelconque des revendications précédentes, dans lequel le mécanisme à levier pivotant (43, 44, 45, 46, 47, 48, 49) peut être actionné au pied et/ou le dispositif de déclenchement (28, 43) présente un étrier de traction (32) agencé à proximité de l'élément de préhension (6) pour l'actionnement manuel.

6. Dispositif (1) selon l'une quelconque des revendications précédentes, comprenant un élément d'amortissement (38) qui relie l'unité d'accouplement (3, 4) à l'élément de préhension (6) de manière amortissante, notamment un amortisseur en caoutchouc ou un silentbloc.

7. Dispositif (1) selon la revendication précédente et la revendication 2, dans lequel l'élément d'amortissement (38) est intégré dans l'articulation tournante (14, 15).
